# EUROPEAN PATENT SPECIFICATION

(11) **EP 0 887 227 B1**
(45) Date of publication and mention of the grant of the patent: **19.03.2008**
(21) Application number: 98111455.6
(22) Date of filing: 22.06.1998
(51) Int. Cl.: B60Q 1/068

(54) **Optical-axis adjuster for vehicle auxiliary light**
Einstellung der optischen Achse für Kfz-Hilfsbeleuchtung
Ajustement de l'axe optique d'un dispositif d'éclairage auxiliaire pour véhicule

(30) Priority: 25.06.1997 JP 16911097
(43) Date of publication of application: 30.12.1998
(73) Proprietor: ICHIKOH INDUSTRIES LIMITED, Shinagawa-ku Tokyo 141 (JP)
(72) Inventor: Fukushima, Shouichi, Isehara-Shi, Kanagawa (JP)
(74) Representative: Grünecker, Kinkeldey, Stockmair & Schwanhäusser Anwaltssozietät

(56) References cited:
- EP-A- 0 512 793
- DE-A- 3 327 789
- GB-A- 2 020 410
- GB-A- 2 285 501
- US-A- 5 193 905
- US-A- 5 260 857

## Description

### BACKGROUND OF THE INVENTION

### a) Field of the Invention

The present invention relates to a lamp unit with an optical-axis adjuster according to the preamble of claim 1.

### b) Description of the Prior Art

For adjusting the optical axis of the lights for cars, a variety of devices has been proposed so far. Generally, for head lights having a tiltable lamp unit, an optical-axis adjuster is used by which the lamp unit is tilted vertically and horizontally in relation to the car body frame. The head light of this type comprises a support mechanism to support the lamp unit to be tiltable horizontally and vertically in relation to the car body frame, and a drive mechanism including two adjusting screws which tilt the lamp housing horizontally and vertically, respectively, in relation to the car body frame, gear mechanisms which rotate the screws, respectively, etc. To adjust the optical axis of an auxiliary light such as a fog lamp, the optical-axis adjuster adopts a mechanism which tilts the lamp unit only vertically in relation to the car body frame. The members forming the drive mechanism are housed in a casing fixed to the car body frame, and an insertion or guide hole through which a turning tool such as a screwdriver is introduced to drive a gear which moves the adjusting screw axially, is formed in the casing, that is to say, in the car body frame. Therefore, the installation of the casing having such a hole to the car body frame should be designed with a consideration given to the structural form of the car body frame. Since the location of the optical-axis adjuster thus depends upon the structural form of the car body frame, the insertion hole cannot be located in a proper position where the turning tool can easily be used to drive a gear. In this case, the optical-axis adjuster cannot easily be installed and thus the optical axis of the light cannot easily be adjusted. The drive mechanism comprises members independent of those included in the lamp housing. Therefore, the lamp assembly consists of relatively many parts including a gear mechanism comprising complicated ones such as a worm gear, etc. Installation of the lamp assembly to the car body frame has to be done in many steps, and is thus troublesome.

A lamp unit with an optical-axis adjustor according to the preamble of claim 1 is know from GB 2,285,501. Specifically, this prior art teaches to insert a turning tool, which transmits rotational force to a bevel gear, into a driver guide of a bearing attached to a bracket.

### SUMMARY OF THE INVENTION

The present invention has an object to provide a lamp unit with an optical-axis adjuster for auxiliary light having such a simple construction that said lamp unit can be installed to a car body frame very easily.

The present invention has another object to provide a lamp unit with an optical-axis adjuster for an auxiliary light of which the installation to a car body frame does not depend upon the structural form of the car body frame.

The above object can be accomplished by providing a lamp unit as defined in claim 1. A preferred embodiment thereof is defined in claim 2.

According to the present invention, just by fitting the ball formed on the one end of the adjusting screw into the ball receiver fixed to the lamp unit and screwing the externally threaded, other-end portion of the adjusting screw into the screw hole in the screw mount fixed to the bracket, the drive mechanism including the gear to drive the adjusting screw can be easily installed to the bracket. Therefore, only by installing the bracket to the car body frame with a suitable fastening means, the optical-axis adjuster can easily be installed to the car body frame.

Also according to the present invention, the guide means is provided in the lamp unit, through which the turning tool can be introduced to rotate a gear mechanism in order to move the adjusting screw axially. Therefore, the installation of the optical-axis adjuster according to the present invention to a car body frame can be designed with no consideration given to the structural form of the car body frame.

### BRIEF DESCRIPTION OF THE DRAWINGS

These objects and other objects, features, aspects and advantages of the present invention will become more apparent from the following detailed description of a preferred embodiment of the present invention when taken in conjunction with the accompanying drawings, in which:
FIG. 1 is a front view of a fog light provided with the optical-axis adjuster according to the present invention;
FIG. 2 is a sectional view taken along the line II-II in FIG. 1; and
FIG. 3 is a rear view of the fog light in FIG. 1.

### DETAILED DESCRIPTION OF THE PREFERRED EMBODIMENTS

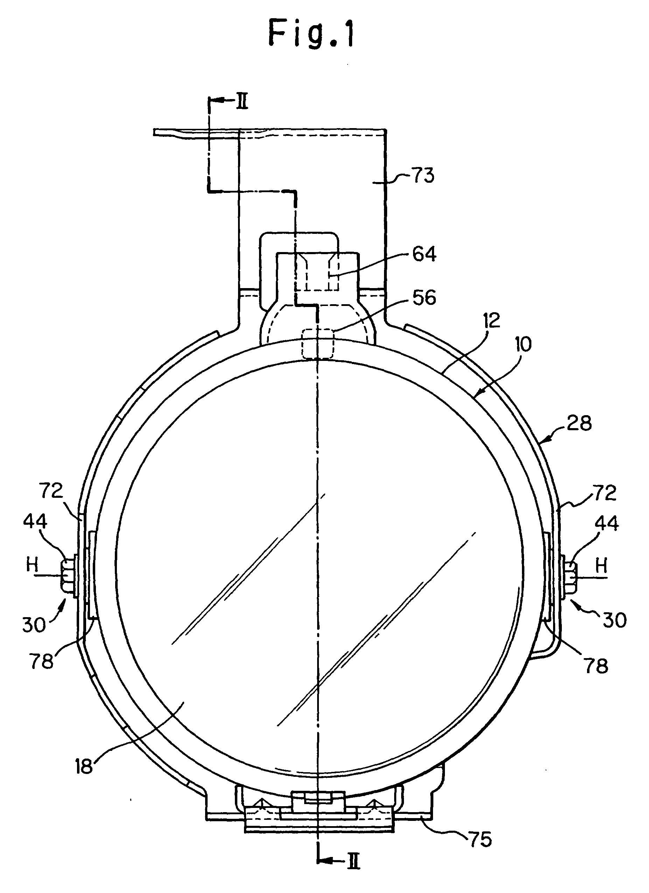

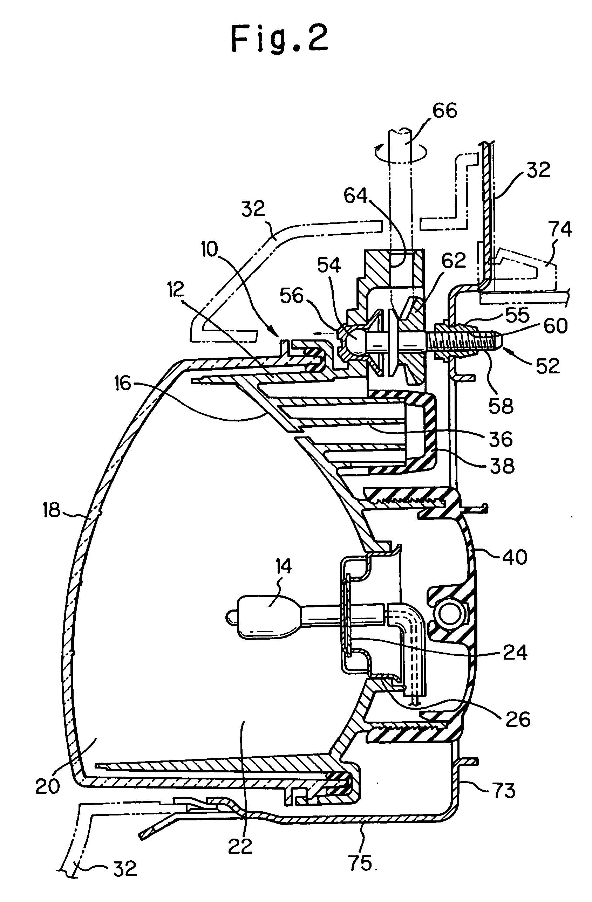

Referring now to FIG. 1, a fog light with the optical-axis adjuster of the present invention is shown. A lamp unit of the fog light is generally shown with a reference 10. As better seen from FIG. 2, the lamp unit 10 comprises a lamp housing 12, a lamp bulb 14, a reflector 16 provided inside the lamp housing 12 to reflect the light from the lamp bulb 14 in an appropriate direction, and a front lens 18 disposed to cover a front opening 20 of the lamp housing 12. The lamp bulb 14 is provided in a lamp space 22 defined by the lamp housing 12 and front lens 18. The lamp bulb 14 is held removably in a bulb holder 24 supported by a spring 26. The lamp space 22 communicates with the atmosphere through a breather 36.

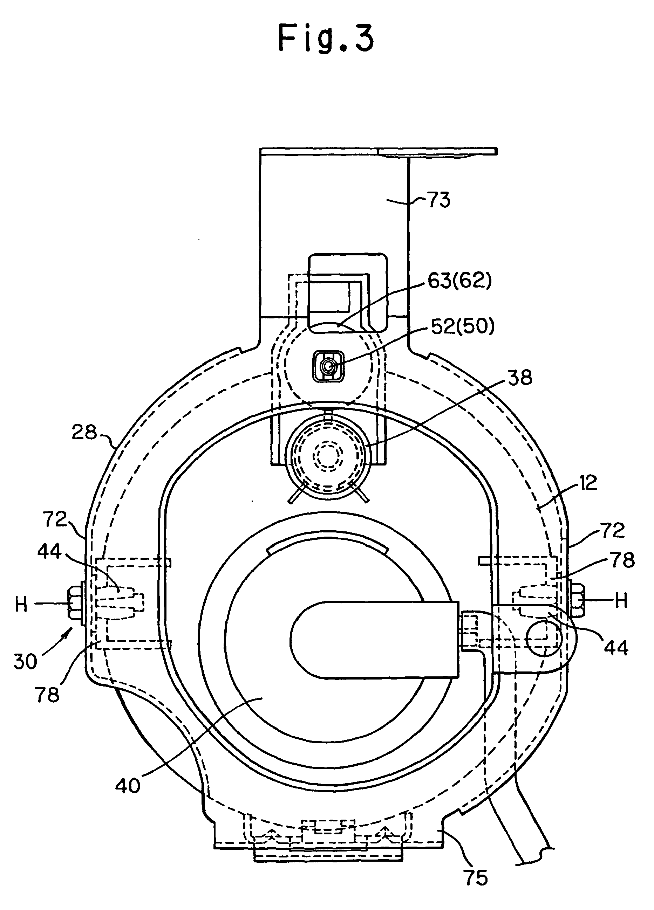

As will be seen from FIGS. 1 and 3, a bracket 28 is provided to which the lamp housing 12 is connected by means of a support 30 to be vertically tiltable in relation to the bracket 28. Thus, the lamp unit 10 can be tilted up and down. The support 30 will be further described later. The bracket 28 consists of lateral portions 72, a rear portion 73 connecting the lateral portions 72, and a bottom portion 75 extending horizontally from the rear portion 73. The rear portion 73 and bottom portion 75 are adapted for fixation to a car body frame 32 with a suitable well-known means. This well-known fixing means may be a clip 74, for example, which is indicated with an imaginary line. The rear portion 73 of the bracket 28 is fixed at the upper portion thereof to the frame 32 with the clip 74 while the bottom portion 75 is fixed at the free end thereof to the frame 32 in a manner shown, by way of example, in FIG. 2.

The bulb holder 24 and breather 36 are covered with waterproof caps 38 and 40, respectively, as shown in FIGS. 2 and 3.

The aforementioned support 30 consists of a pair of clip bolts 44 as shown in FIGS. 1 and 3, and connects the lamp unit 10 to the bracket 28 in a vertically tiltable manner. The clip bolts 44 are inserted from outside the lateral portions 72 of the bracket 28 into through-holes, respectively, formed in the lateral potions 72, respectively, of the bracket 28 and through-holes, respectively, formed in opposite lateral walls 78, respectively, of the lamp housing 12 nearly in line with those formed in the lateral portions 72 of the bracket 28. As each of the clip bolts 44 is driven into the through-holes, its flaps are opened away from the axis of the bolt 44 to disable the bolt 44 from being disengaged from the through-holes in the lateral portions 72 and 78 while allowing the lamp housing 12 to freely rotate in relation to the bracket 28. The clip bolts 44 are well known. The lamp housing 12 and hence the lamp unit 10 are supported tiltably about the horizontal axis H-H being a straight line connecting the pair of clip bolts 44 and in relation to the bracket 28.

Further, there is provided between the lamp housing 12 and bracket 28 a drive mechanism 50 to tilt the lamp unit 10. The drive mechanism 50 comprises an adjusting screw 52 to tilt the lamp housing 12 in relation to the bracket 28, and a bevel gear 62 included in a gear mechanism 63 mechanically connected to the adjusting screw 52 as will be further described later. One end of the adjusting screw 52 is formed to be spherical as indicated with a reference 54. The ball 54 is fitted or articulated in a receiver 56 fitted through a hole formed in the lamp housing 12. The other end portion of the adjusting screw 52 is externally threaded at 58. The threaded portion 58 of the adjusting screw 52 is screwed into an internally threaded hole or screw hole 60 formed in a screw mount 55 fitted through a hole formed in the rear portion 73 of the bracket 28.

As seen, the ball receiver 56 is fitted through the hole formed in the upper rear portion of the lamp housing 12. Thus, the hole is remote from the horizontal axis H-H. The adjusting screw 52 is fitted or articulated at the ball 54 thereof in the receiver 56 to be pivotable therein.

Further, the bevel gear 62 forming a part of the gear mechanism 63 is located near the ball 54 of the adjusting screw 52 and fixed coaxially on the adjusting screw 52. The lamp housing 12 has formed in the top portion thereof a guide hole 64 extending vertically downward and through which a turning means for rotating the bevel gear 62, for example, a Philips screwdriver 66, is introduced to the bevel gear 62. The guide hole 64 extends generally perpendicularly to the moving direction of the adjusting screw 52. For operating the optical-axis adjuster according to the present invention, the Philips screwdriver 66 is introduced through the guide hole 64 until it is engaged at the Philips head tip thereof with the teeth of the bevel gear 62. Thus, a rotation of the Philips screwdriver 66 is transmitted to the bevel gear 62.

As mentioned above, the ball 54 formed at the one end of the adjusting screw 52 is pivotably fitted and held in the ball receiver 56 fitted in the lamp housing 12, and the other-end, externally threaded portion 58 of the adjusting screw 52 is screwed in the screw hole 60 of the screw mount 55 fitted through the bracket 28. The Philips screwdriver 66 is inserted through the guide hole 64 and engaged at the Philips head tip thereof with the teeth of the bevel gear 62. As the Philips screwdriver 66 is turned, the bevel gear 62 is rotated accordingly. Thus, the adjusting screw 52 is rotated and moved axially or back and forth. As the adjusting screw 52 moves axially, the lamp unit 10 is tilted about the horizontal axis H-H in relation to the bracket 28 so that the optical axis thereof can be adjusted, namely, it can be tilted up and down. The ball receiver 56 is located at the top of the lamp housing 12. That is to say, it is farthest from a straight line connecting the pair of clip bolts 44, namely, the horizontal axis H-H. Therefore, the optical axis of the lamp unit 10 can be tilted largely by moving the adjusting screw 52. Generally, the lamp unit 10 is only tilted some degrees in practice for adjustment of the optical axis thereof. In this embodiment, a short moving distance of the adjusting screw 52 provides a large vertical tilt of the lamp unit owing to the above-mentioned construction of the optical-axis adjuster according to the present invention.

According to the above-mentioned embodiment of the present invention, the drive mechanism 50 can be installed to the lamp unit 10 extremely easily by screwing the externally threaded portion 58 of the adjusting screw 52 into the screw hole 60 formed in the screw mount 55 fixed in the bracket 28 and then fitting the ball 54 of the adjusting screw 52 into the ball receiver 56 in the lamp housing 12. The bracket 28 to which the lamp housing 12 is supported and the drive mechanism 50 is thus installed can very easily be fixed to the car body frame 32 with a well-known fixing means such as a clip, bolt nut or the like. Also, the guide hole 64 through which a turning tool is introduced to the bevel gear 62 is formed in the top portion of the lamp housing 12 above, and nearly perpendicularly to the moving direction of, the adjusting screw 52. Therefore, the installation of the optical-axis adjuster according to the present invention to a car body frame can be designed with no consideration given to the form of the car body frame, and the optical axis of the lamp unit 10 can thus be adjusted very easily once the bracket 28 is installed to the car body frame.

## Claims

1. A lamp unit (10) with an optical-axis adjuster for adjusting the tilt of the optical axis of said lamp unit (10) having a lamp bulb (14), reflector (16), lamp housing (12) and a front lens (18) in relation to a car body frame, comprising:
a bracket (28) formed for fixation to the car body frame and provided with a support (30) which supports the lamp unit (10) to be horizontally tiltable;
a drive mechanism (50) provided between the lamp unit (10) and bracket (28) and including an adjusting screw (52) to tilt the lamp unit (10) and a bevel gear (62) fixed coaxially on the adjusting screw (52);
said adjusting screw (52) being formed at one end thereof as a ball (54) which is articulated in a ball receiver (56) fixed to the lamp unit (10) while being externally threaded at the other end portion thereof, the externally threaded portion (58) of the adjusting screw (52) being screwed in a screw hole (60) formed in a screw mount (55) fixed to the bracket (28); and
a guide means, through which a turning tool (66) to rotate the bevel gear (62) is introduced,
**characterized in that**
said guide means is provided in the lamp housing (12).

2. The lamp unit (10) with the optical-axis adjuster as set forth in Claim 1, wherein said guide means is a guide hole (64) formed nearly perpendicularly to the moving direction of the adjusting screw (52).

3. A fog light comprising a lamp unit (10) with an optical-axis adjuster according to any of claims 1 and 2, wherein said reflector (16) reflects a light from the lamp bulb (10) in an appropriate direction and is provided inside of said lamp housing (12) and said front lens (18) covers the front opening of the lamp housing (12) and said bevel gear (62) is provided near one end of the adjusting screw (52).

## Patentansprüche

1. Fahrzeugscheinwerfereinheit (10), mit einem Einsteller der optischen Achse zum Einstellen der Neigung der optischen Achse der Fahrzeugscheinwerfereinheit (10), mit einer Scheinwerferglühbirne (14), einem Reflektor (16), einem Scheinwerfergehäuse (12) und einer Frontlinse (18) in Beziehung zu einem Karosserierahmen, umfassend:
eine Halterung (28), ausgebildet für die Befestigung an dem Karosserierahmen und mit einem Halter (30) versehen, der die Fahrzeugscheinwerfereinheit (10) so hält, dass sie horizontal geneigt werden kann,
einen Antriebsmechanismus (50), bereitgestellt zwischen der Fahrzeugscheinwerfereinheit (10) und der Halterung (28), und eine Einstellschraube (52) zum Neigen der Fahrzeugscheinwerfereinheit (10) und ein koaxial auf der Einstellschraube (52) befestigtes Kegelrad (62) enthaltend,
wobei die Einstellschraube (52) an einem Ende davon als eine Kugel (54) ausgebildet ist, die gelenkig in einer an der Fahrzeugscheinwerfereinheit (10) befestigten Kugelaufnahme (56) sitzt, während sie an dem anderen Endteil davon mit einem Außengewinde versehen ist, wobei der mit Außengewinde versehene Teil (58) der Einsteilschraube (52) in ein Schraubenloch (60) geschraubt ist, das in einem an der Halterung (28) befestigten Schraublager (55) ausgebildet ist, und
eine Führungseinrichtung, durch die ein Drehwerkzeug (66) zum Drehen des Kegelrades (62) eingeführt wird,
**dadurch gekennzeichnet, dass**
die Führungseinrichtung in dem Scheinwerfergehäuse (12) bereitgestellt ist.

2. Fahrzeugscheinwerfereinheit (10) mit dem Einsteller der optischen Achse nach Anspruch 1, wobei die Führungseinrichtung ein Führungsloch (64) ist, das nahezu senkrecht zu der Bewegungsrichtung der Einstellschraube (52) ausgebildet ist.

3. Nebelleuchte, umfassend eine Fahrzeugscheinwerfereinheit (10) mit einem Einsteller der optischen Achse nach den Ansprüchen 1 und 2, wobei der Reflektor (16) ein Licht von der Scheinwerferglühbirne (10) in eine angemessene Richtung reflektiert und im Inneren des Scheinwerfergehäuses (12) bereitgestellt ist, die Frontlinse (18) die vordere Öffnung des Scheinwerfergehäuses abdeckt und das Kegelrad (62) nahe von einem Ende der Einstellschraube (52) bereitgestellt ist.

## Revendications

1. Unité de lampe (10) comportant un élément de réglage d'axe optique pour régler par rapport à un châssis de carrosserie d'automobile l'inclinaison de l'axe optique de ladite unité de lampe (10) composée d'une ampoule (14), d'un réflecteur (16), d'un boîtier de lampe (12) et d'une lentille avant (18), comprenant :
une patte d'attache (28) qui est conçue pour être fixée au châssis de carrosserie et qui est pourvue d'un support (30) qui supporte l'unité de lampe (10) pour que celle-ci puisse être inclinée horizontalement ;
un mécanisme de commande (50) qui est disposé entre l'unité de lampe (10) et la patte d'attache (28) et qui comporte une vis de réglage (52) pour incliner l'unité de lampe (10), et un engrenage conique (62) fixé coaxialement sur la vis de réglage (52) ;
la vis de réglage (52) étant conçue à une extrémité comme une bille (54) articulée dans un logement de bille (56) fixé à l'unité de lampe (10), tandis qu'elle présente à son autre extrémité un filetage extérieur, la partie à filetage extérieur (58) de la vis de réglage (52) étant vissée dans un trou fileté (60) qui est formé dans un raccord fileté (55) fixé à la patte d'attache (28) ; et
un moyen de guidage grâce auquel est introduit un outil rotatif (66) destiné à faire tourner l'engrenage conique (62),
**caractérisée en ce que** le moyen de guidage est disposé dans le boîtier de lampe (12).

2. Unité de lampe (10) pourvue de l'élément de réglage d'axe optique selon la revendication 1, dans laquelle le moyen de guidage est constitué par un trou de guidage (64) qui est formé à peu près perpendiculairement au sens de déplacement de la vis de réglage (52).

3. Phare antibrouillard comprenant une unité de lampe (10) pourvue d'un élément de réglage d'axe optique selon l'une quelconque des revendications 1 et 2, dans lequel le réflecteur (16) réfléchit dans un sens approprié une lumière provenant de l'ampoule (10) et est disposé à l'intérieur du boîtier de lampe (12), la lentille avant (18) couvre l'ouverture avant dudit boîtier (12), et l'engrenage conique (62) est disposé près d'une extrémité de la vis de réglage (52).
